# EUROPÄISCHE PATENTSCHRIFT

(11) **EP 2 242 633 B1**
(45) Veröffentlichungstag und Bekanntmachung des Hinweises auf die Patenterteilung: **20.07.2011**
(21) Anmeldenummer: 09707282.1
(22) Anmeldetag: 24.01.2009
(51) Int. Cl.: B29C 45/68

(54) **LINEARANTRIEB MIT EINEM SPINDELTRIEB**
LINEAR DRIVE COMPRISING A SPINDLE DRIVE
MÉCANISME D'ENTRAÎNEMENT LINÉAIRE POURVU D'UN ENTRAÎNEMENT PAR BROCHE

(30) Priorität: 06.02.2008 DE 102008007793
(43) Veröffentlichungstag der Anmeldung: 27.10.2010
(73) Patentinhaber: Robert Bosch GmbH, 70469 Stuttgart (DE)
(72) Erfinder: SCHÄFFER, Rudolf, 97828 Marktheidenfeld (DE)
(74) Vertreter: Thürer, Andreas
(86) Internationale Anmeldenummer: PCT/EP2009/000457
(87) Internationale Veröffentlichungsnummer: WO 2009/097983

(56) Entgegenhaltungen:
- EP-A- 1 331 079
- EP-A- 1 967 348
- WO-A-2005/118252
- DE-A1- 4 111 594

## Beschreibung

Die Erfindung geht aus von einem Linearantrieb, der die Merkmale aus dem Oberbegriff des Anspruchs 1 aufweist.

Derartige Linearantriebe werden bei Maschinen eingesetzt, bei denen schnelle Stellbewegungen und anschließend hohe Haltekräfte zu realisieren sind. Bevorzugt finden diese Linearantriebe Anwendung in Schließ- bzw. Einspritzeinheiten von Kunststoffspritzgießmaschinen, die sich durch die Kombination einer elektromechanischen Antriebsvorrichtung zur Erzeugung der schnellen Stellbewegung mit einer hydraulischen Antriebsvorrichtung zur Erzeugung der hohen Haltekraft, als Hybridantriebe darstellen.

Aus der DE 41 11 594 A1 ist ein Linearantrieb bekannt, dessen bewegliche Formaufspannplatte und Hydrozylinder von einem Elektromotor über ein Getriebe, das eine Hubspindel und eine Spindelmutter umfasst, verfahren werden kann, um die Form schnell zu öffnen und zu schließen. Die hohe Schließkraft wird durch Druckbeaufschlagung des mit der Formaufspannplatte verfahrbaren Hydrozylinders aufgebracht. Dabei wird die gesamte Reaktionskraft über die Spindel und die Spindelmutter auf das Maschinengestell abgeleitet. Die Kunststoffspritzgießmaschine nach der DE 41 11 594 A1 ist außer den Komponenten des elektrischen Antriebs auch mit einem vollständigen hydraulischen System einschließlich Ölbehälter, Pumpe, Ventilen und Hydrozylinder ausgestattet.

Aus der EP 1 331 079 A1 ist ein Linearantrieb bekannt, der für eine Schließeinheit an einer Kunststoffspritzgießmaschine verwendet wird und die Merkmale aus dem Oberbegriff des Anspruchs 1 aufweist. Bei diesem Linearantrieb ist der kolbenstangenabseitige Druckraum dauernd mit einem auf einen niedrigen Druck von 10 bis 15 bar aufgeladenen Hydrospeicher verbunden. Zwischen dem kolbenstangenseitigen Druckraum und dem kolbenstangenabseitigen Druckraum ist ein Rückschlagventil angeordnet, das zum kolbenstangeseitigen Druckraum hin öffnet. Außerdem ist der kolbenstangenseitige Druckraum über ein 2/2 Wege-Schaltventil mit einem Druckraum an einem Primärkolben verbindbar und von diesem abtrennbar. Bei diesem bekannten Linearantrieb wird während der Stellbewegung die Kolbenstange der Differentialzylindereinheit mit dem Spindeltrieb eingefahren. Der sich dabei vergrößernde kolbenstangenseitige Druckraum wird über das Rückschlagventil mit aus dem kolbenstangenabseitigen Druckraum verdrängten Druckmittel gefüllt. Nach dem Schließen der Form wird zum Aufbau einer Zuhaltekraft der kolbenstangenseitige Druckraum mit dem Druckraum am Primärkolben verbunden. Durch eine folgende Verschiebung des Primärkolbens mit Hilfe des Spindeltriebs wird Druckmittel aus dem Druckraum am Primärkolben in den kolbenstangenseitigen Druckraum der Differentialzylindereinheit verdrängt und dadurch ein die Zuhaltekraft erzeugender hoher Druck aufgebaut. Dabei wird die am Primärkolben angreifende Kraft übersetzt, da die den kolbenstangenseitigen Druckraum der Differentialzylindereinheit begrenzende Wirkfläche für den Druck größer ist als die Wirkfläche am Primärkolben.

Der Erfindung liegt die Aufgabe zugrunde, einen Linearantrieb mit den Merkmalen aus dem Oberbegriff des Anspruchs 1 so weiterzuentwickeln, dass dieser besonders geräuscharm ist und kompakt mit einem hohen Wirkungsgrad aufgebaut ist.

Diese Aufgabe wird für einen Linearantrieb mit den Merkmalen aus dem Oberbegriff durch eine zusätzliche Ausstattung mit den Merkmalen aus dem kennzeichnenden Teil des Anspruchs 1 gelöst.

Bei einem erfindungsgemäßen Linearantrieb wird ein Hydrospeicher eingesetzt, in den beim Ausfahren einer Kolbenstange einer Differentialzylindereinheit Druckmittel aus einem kolbenstangenseitigen, ringförmigen, ersten Druckraum verdrängt wird, während Druckmittel aus einem Tank in einen kolbenstangenabseitigen, zweiten Druckraum nach fließt. Zum Aufbringen der erforderlichen Haltekraft wird der kolbenstangenabseitige, vom Tank abgesperrte, zweite Druckraum fluidisch mit dem Hydrospeicher verbunden und nach Einströmen des Druckmittels in den zweiten Druckraum ein erhöhter Druck durch Kompression des Druckmittels erzeugt.

Durch den Einbau eines Hydrospeichers funktioniert der Linearantrieb mit einem höherem Wirkungsgrad und besonders geräuscharm, da kein Aggregat benötigt wird. Durch die Verwendung eines Hydrospeichers anstelle eines Aggregates wird der für den Linearantrieb erforderliche Bauraum reduziert.

Weitere vorteilhafte Ausgestaltungen eines erfindungsgemäßen Linearantriebes sind in den Unteransprüchen angegeben.

Prinzipiell besteht die Möglichkeit, mittels Einsatz eines Schaltventils die fluidische Verbindung zum Hydrospeicher während der Stellbewegung zu öffnen und während der Zuhaltung zu schließen, um den ersten Druckraum zum Tank zu entlasten. Besonders einfach ist die Konstruktion, wenn die fluidische Verbindung des ersten Druckraumes mit dem Hydrospeicher ohne Zwischenschaltung eines Ventils dauernd besteht.

Vorzugsweise ist der zweite Druckraum mittels einer schaltbaren Ventilanordnung mit dem Tank oder dem Hydrospeicher verbunden, um die Druckverhältnisse im zweiten Druckraum entsprechend der Stellbewegung des Kolbens schnell zu ändern bzw. bei der Zuhaltung des Kolbens durch alleinige Zuschaltung des Hydrospeichers auf einfache Weise die Haltekraft durch Entladung des Speichers zu steuern. Vorzugsweise wird die Ventilanordnung durch zwei 2/2-Wegeventile realisiert, von denen das eine die Verbindung zum Tank und das andere die Verbindung zum Hydrospeicher steuert.

Besonders kompakt wird der Linearantrieb, wenn ein den Spindeltrieb betätigender Elektromotor parallel zur Differentialzylindereinheit angeordnet ist.

Vorteilhafterweise ist der elektrisch betätigte Spindeltrieb als Wälzgewindetrieb mit einer als Wälzgewindemutter ausgestatteten Spindelmutter ausgebildet, da hohe geräusch- und verlustarme Verfahrgeschwindigkeiten mit geringem Reibungswiderstand und hoher Positioniergenauigkeit erzielt werden.

In konstruktiv besonders kompakter Bauweise sind die Achse der Differentialzylindereinheit und die Achse des Spindeltriebes parallel in geringem Abstand zueinander angeordnet.

Für eine konstruktiv besonders einfache Übertragung der Linearbewegung der Spindel auf die Kolbenstange ist die Spindel mit der Kolbenstange fest über eine Quertraverse verbunden.

Gemäß einer besonders bevorzugten Ausgestaltung der vorliegenden Erfindung sind der Spindeltrieb und die Differentialzylindereinheit koaxial zueinander angeordnet. Dadurch wird die Bauform des Linearantriebes besonders kompakt.

In konstruktiv besonders kompakter Bauweise ist der Differentialzylinder mit einem Zylinderrohr, einem Zylinderkopf, einem Zylinderboden und einem hohlen Kolben mit einer hohlen Kolbenstange ausgebildet, in die die Spindel nach Durchquerung des Zylinderbodens hineinragt.

Dadurch, dass die Spindel eine gewindefreie Verlängerung hat, mit der sie den Zylinderboden abgedichtet durchsetzt, ist die Länge des mit einem Gewindegang versehenden Spindelabschnittes minimal und somit kostengünstiger. Durch die gewindefreie Verlängerung ist die Anbindung an den Elektromotor, die Lagerung der Spindel und die Abdichtung an der Durchsetzungsstelle auf konstruktiv einfache Weise möglich.

Die besonders bevorzugte Ausgestaltung, dass der Hohlkolben die Spindelmutter bildet, ermöglicht eine Ausführung mit wenigen Bauteilen.

Als Vorteil erweist sich, dass der Hohlraum mit dem zweiten Druckraum außerhalb des Eingriffsbereiches von Spindel und Spindelmutter dauernd fluidisch durch wenigstens eine im Kolben befindliche Bohrung mit schrägem Verlauf verbunden ist. Dadurch erfolgt der Druckausgleich zwischen dem Druckraum in der hohlen Kolbenstange und dem zweiten Druckraum schnell auf konstruktiv einfache Weise.

Ausführungsbeispiele eines erfindungsgemäßen Linearantriebes sind in den Zeichnungen dargestellt. Anhand der Figuren dieser Zeichnungen wird die Erfindung nun näher erläutert.

Es zeigen:
Fig.1 einen Längsschnitt durch ein schematisch dargestelltes erstes Ausführungsbeispiel eines erfindungsgemäßen Linearantriebes,
Fig.2 einen Längsschnitt durch ein schematisch dargestelltes zweites Ausführungsbeispiel eines erfindungsgemäßen Linearantriebes.

Die beiden Ausführungsbeispiele umfassen eine Differentialzylindereinheit 10, die über Leitungen 11, 12, und 13 mit einem Tank 14 und einem Hydrospeicher 15 verbunden ist, und einen Spindeltrieb 16, dessen Antrieb über ein Zahnrad 42 erfolgt, das über einen Zahnriemen 17 mit einem Ritzel 43 eines Elektromotors 18 kämmt. Der Spindeltrieb 16 setzt sich aus einer Kugelgewindespindel 29 und einer Spindelmutter 30 zusammen. Die Differentialzylindereinheit 10 setzt sich aus einem Kolben 19 bzw. 31 mit einer Kolbenstange 20 bzw. 32 und einem Zylindergehäuse 21 zusammen. Das Zylindergehäuse weist ein Zylinderrohr 33, einen Zylinderkopf 34, durch den die Kolbenstange 20 bzw. 32 an einem freien Ende 27 nach außen geführt wird, und einen Zylinderboden 35 auf. Der Kolben 19 bzw. 31 grenzt mit einer Wirkfläche 38 an das Zylinderinnere, die der Querschnittsfläche des Zylinderinnenraumes entspricht. Der Kolben trennt das Innere des Zylindergehäuses in einen kolbenstangenseitigen, ersten Druckraum 22 und einen kolbenstangenabseitigen, zweiten Druckraum 23. Die Leitung 11 führt vom ersten Druckraum 22 zum Hydrospeicher 15 und besteht dauernd. Die Leitung 12 verläuft zwischen dem Hydrospeicher 15 und dem zweiten Druckraum 23 und ist mittels eines ersten 2/2-Wegeventils 24 in erster Schaltstellung geschlossen. Die Leitung 13 verbindet den zweiten Druckraum 23 mit dem Tank 14 und ist mittels eines zweiten 2/2-Wegeventils 25 in erster Schaltstellung geöffnet. Zwischen dem Druckraum 22 und dem Tank 14 ist ein zum Druckraum 22 hin öffnendes Rückschlagventil 44 angeordnet. Das Zylindergehäuse 21 ist mechanisch fest mit einem ortsfesten Gestell 26 verbunden.

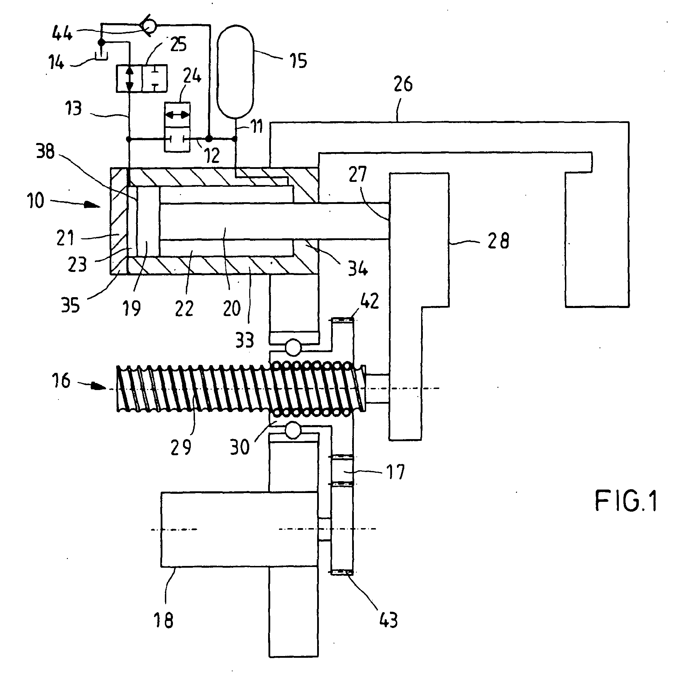

Bei dem Ausführungsbeispiel nach Figur 1 sind die Achsen der Differentialzylindereinheit 10, des Spindeltriebs 16 und des Elektromotors 18 parallel und jeweils im Abstand zueinander angeordnet. Die Kolbenstange 20 ist am freien Ende 27 mit einer Quertraverse 28 mechanisch fest verbunden. Der Spindeltrieb 16 weist die Kugelgewindespindel 29 und die am Gestell 26 drehbar kugelgelagerte Spindelmutter 30 auf. Die Spindel 29 ist mechanisch fest mit der Quertraverse 28 verbunden.

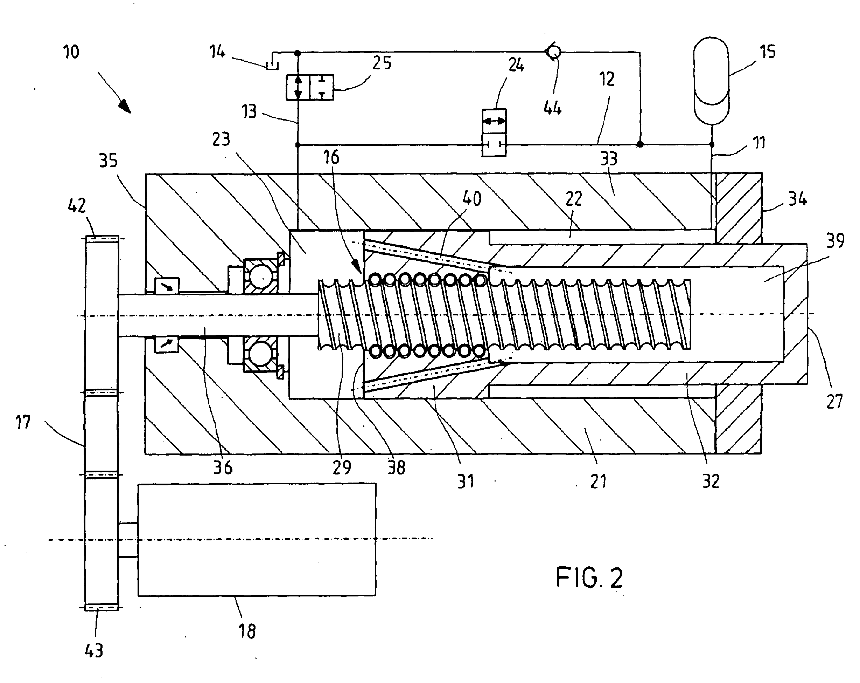

Bei dem Ausführungsbeispiel nach Figur 2 ist die Achse der Differentialeinheit 10 mit der des Spindeltriebes 16 identisch, die Achse des Elektromotors ist im Abstand parallel zu dieser angeordnet. Der Spindeltrieb 16 ist koaxial in die Differentialzylindereinheit 10 integriert. Die Differentialzylindereinheit 10 besitzt den Kolben 31, der hier hohl ausgebildet ist, und die Kolbenstange 32, die hohl, aber am freien Ende 27 geschlossen ist. Der Spindeltrieb 16 weist den Hohlkolben 31, der hier die Spindelmutter bildet, und die Kugelgewindespindel 29 auf, die hier mit einer gewindefreien Verlängerung 36 ausgeführt ist. Die Spindel 29 durchsetzt, abgedichtet und wälzgelagert, mit der gewindefreien Verlängerung 36 den Zylinderboden 35 koaxial und ist in den hohlen Kolben 31 und in die hohle Kolbenstange 32 geführt. Der Innenraum 39 der hohlen Kolbenstange 32 ist über Verbindungsbohrungen 40 im Kolben 31 mit dem kolbenstangenabseitigen, zweiten Druckraum 23 verbunden und kann somit als Teil dieses Druckraumes 23 angesehen werden.

In der in Figur 1 und Figur 2 gezeigten Konstellation ist der Kolben 19 bzw. 31 eingefahren, das 2/2-Wegeventil 25 zum Tank 14 ist geöffnet und das 2/2-Wegeventil 24 zum Hydrospeicher 15 ist geschlossen.

Wird nun bei dem Ausführungsbeispiel in Figur 1 der Elektromotor 18 entsprechend angesteuert, betätigt dieser den Spindeltrieb 16, indem die drehbar gelagerte Spindelmutter 30 die vom Elektromotor 18 erzeugte Rotationsbewegung auf die Spindel 29 überträgt und diese zur axialen Verschiebung der Quertraverse 28 linear bewegt. Die vom Spindeltrieb 16 angesteuerte Quertraverse 28 überträgt die lineare Bewegung über die Kolbenstange 20 auf den Kolben 19. Bei Ausfahrbewegung des Kolbens 19 wird Druckmittel über die Leitung 11 aus dem kolbenstangenseitigen, ersten Druckraum 22 in den Hydrospeicher 15 verdrängt, während Druckmittel aus dem Tank 14 in den kolbenstangenabseitigen, zweiten Druckraum 23 nach fließt. Während der Ausfahrbewegung des Kolbens 19 ist die Leitung 13 vom Tank 14 in den kolbenstangenabseitigen zweiten Druckraum 23 durch das 2/2-Wegeventil 25 geöffnet und die Leitung 12 zwischen dem Hydrospeicher 15 und dem zweiten Druckraum 23 durch das 2/2-Wegeventil 24 geschlossen, sodass Druckmittel in den Hydrospeicher 15 strömt. Ist die Werkzeugform geschlossen, wird die Linearbewegung der Spindel 29 gestoppt, die Leitung 13 zum Tank 14 geschlossen und die Leitung 11 zum Hydrospeicher 15 geöffnet. Der zweite Druckraum 23 wird mit Speicherdruck beaufschlagt. In den Druckräumen 22 und 23 stellt sich der gleiche Druck ein, aufgrund der größeren kolbenstangenabseitigen Wirkfläche 38 im Druckraum 23 wird der Kolben 19 mit großer Kraft zugehalten.

Bei dem Ausführungsbeispiel nach Figur 2 wird die vom Elektromotor 18 erzeugte Rotationsbewegung von der Spindel 29 auf den die Spindelmutter bildenden Hohlkolben 31 übertragen, dadurch wird eine axial verlaufende Linearbewegung des Hohlkolbens 31 und der hohlen Kolbenstange 32 bewirkt. Bei Ausfahrbewegung des Hohlkolbens 31 strömt Druckmittel über die Leitung 11 aus dem ersten Druckraum 22 in den Hydrospeicher 15, während Druckmittel aus dem Tank 14 in den zweiten Druckraum 23 nach fließt. Während der Ausfahrbewegung des Hohlkolbens 31 ist die Leitung 13 vom Tank 14 in den kolbenstangenabseitigen zweiten Druckraum 23 mittels des 2/2-Wegeventils 25 geöffnet und die Leitung 12 zwischen dem Hydrospeicher 15 und dem zweiten Druckraum 23 mittels des 2/2-Wegeventils 24 geschlossen, sodass Druckmittel in den Hydrospeicher 15 strömt. Bei Erreichen der Endposition der hohlen Kolbenstange 32 wird die Rotationsbewegung der Spindel 29 gestoppt, die Leitung 13 geschlossen und die Leitung 12 geöffnet. Druckmittel strömt vom Hydrospeicher 15 in den Druckraum 23. In diesem baut sich ein Druck auf, der gleich dem Druck im Druckraum 22 ist. Da die Wirkfläche 38 auch bei dieser Ausführung der Querschnittsfläche des Zylinderinnenraums entspricht, erwirkt der Druck an der kolbenstangenabseitigen Wirkfläche 38 eine hohe Zuhaltekraft des Formwerkzeuges. Beim Einfahren der hohlen Kolbenstange 32 wird Druckmittel durch das Einfahren der Spindel 29 in die hohle Kolbenstange 32 verdrängt. Die schräg angeordneten Verbindungsbohrungen 40 im Kolben 31 dienen zum Druckausgleich zwischen den Druckräumen 23 und 39. Es wäre auch denkbar, die Druckräume 23 und 39 mittels mindestens einer Verbindungsbohrung in der Spindel 29 zu realisieren.

Bei beiden Ausführungsbeispielen bewirkt das Rückschlagventil 44 ein automatisches Nachsaugen der Kompressionsdruckmittelmenge, sobald der Hydrospeicher 15 leer ist. Zuvor wird der Elektromotor 18 beim Einfahrvorgang durch die Entleerung des Hydrospeichers 15 in den Druckraum 22 unterstützt.

## Patentansprüche

1. Linearantrieb zur Erzeugung einer Stellbewegung und zur Aufbringung einer großen Haltekraft, insbesondere zum Bewegen von Formwerkzeugen sowie zum Aufbringen einer Schließkraft hierauf, mit einem Spindeltrieb (16) für die Stellbewegung, mit einer zum Aufbringen der Haltekraft erforderlichen Differentialzylindereinheit (10), die eine Kolbenstange (20), die mit einem axial bewegten Bauteil (29) des Spindeltriebs (16) verbunden ist, einen kolbenstangenseitigen, ringförmigen, ersten Druckraum (22) und einen kotbenstangenabseitigen, zweiten Druckraum (23) aufweist, und mit einem Hydrospeicher (15),
**dadurch gekennzeichnet, dass** beim Ausfahren der Kolbenstange (20) Druckmittel aus dem ersten Druckraum (22) in den Hydrospeicher (15) verdrängbar ist, dass Druckmittel aus einem Tank (14) in den zweiten Druckraum (23) nachfließt und dass zum Aufbringen der erforderlichen Haltekraft der zweite Druckraum (23) vom Tank abgesperrt (14) und mit dem Hydrospeicher (15) verbunden wird.

2. Linearantrieb nach Anspruch 1, **dadurch gekennzeichnet, dass** der erste Druckraum (22) und der Hydrospeicher (15) dauernd fluidisch verbunden sind.

3. Linearantrieb nach Anspruch 1 oder 2, **dadurch gekennzeichnet, dass** der zweite Druckraum (23) mittels einer schaltbaren Ventilanordnung mit dem Tank (14) und dem Hydrospeicher (15) verbunden ist.

4. Linearantrieb nach Anspruch 3, **dadurch gekennzeichnet, dass** ein erstes 2/2-Wegeventil (24) eine fluidische Verbindung (12) zwischen dem zweiten Druckraum (23) und dem Hydrospeicher (15) schließt, wenn ein zweites 2/2-Wegeventil (25) eine fluidische Verbindung (13) vom zweiten Druckraum (23) zum Tank (14) öffnet.

5. Linearantrieb nach einem der Ansprüche 2 bis 4, **dadurch gekennzeichnet, dass** zwischen dem ersten Druckraum (22) und dem Tank (14) ein zum ersten Druckraum (22) hin öffnendes Rückschlagventil (44) angeordnet ist.

6. Linearantrieb nach einem vorhergehenden Anspruch, **dadurch gekennzeichnet, dass** ein den Spindeltrieb (16) betätigender Elektromotor (18) parallel zur Differentialzylindereinheit (10) angeordnet ist.

7. Linearantrieb nach einem vorhergehenden Anspruch, **dadurch gekennzeichnet, dass** die einen Kolben (19) und ein Zylindergehäuse (21) aufweisende Differentialzylindereinheit (10) mechanisch über das Zylindergehäuse (21) mit einem ortsfesten Gestell (26) verbunden ist.

8. Linearantrieb nach einem vorhergehenden Anspruch, **dadurch gekennzeichnet, dass** der elektrisch betätigte Spindeltrieb (16) als Wälzgewindetrieb mit einer als Wälzgewindemutter ausgestatteten Spindelmutter (30) ausgebildet ist.

9. Linearantrieb nach einem vorhergehenden Anspruch, **dadurch gekennzeichnet, dass** die an ihrer äußeren Umfangsfläche drehbar gelagerte Spindelmutter (30) vom Motor (18) drehend antreibbar ist und die Spindel (29) in Axialrichtung verschiebt.

10. Linearantrieb nach einem vorhergehenden Anspruch, **dadurch gekennzeichnet, dass** die Achse der Differentialzylindereinheit (10) und die Achse des Spindeltriebes (16) parallel im Abstand zueinander angeordnet sind.

11. Linearantrieb nach Anspruch 10, **dadurch gekennzeichnet, dass** die Spindel (29) und die Kolbenstange (20) fest über eine Quertraverse (28) miteinander verbunden sind.

12. Linearantrieb nach einem der Ansprüche 1 bis 9, **dadurch gekennzeichnet, dass** der Spindeltrieb (16) und die Differentialzylindereinheit (10) koaxial zueinander angeordnet sind.

13. Linearantrieb nach Anspruch 12, **dadurch gekennzeichnet, dass** der Differentialzylinder (10) mit einem Zylinderrohr (33), einem Zylinderkopf (34), einem Zylinderboden (35) und einem hohlen Kolben (31) mit einer hohlen Kolbenstange (32) ausgebildet ist und dass die Spindel (29) den Zylinderboden (35) durchquert und in den Hohlraum (39) von Kolben (31) und Kolbenstange (32) hineinragt.

14. Linearantrieb nach Anspruch 12 oder 13, **dadurch gekennzeichnet, dass** die Spindel (29) eine gewindefreie Verlängerung (36) hat, mit der sie den Zylinderboden (35) abgedichtet durchsetzt.

15. Linearantrieb nach Anspruch 12, 13 oder 14, **dadurch gekennzeichnet, dass** der Kolben (31) unmittelbar die Spindelmutter bildet.

16. Linearantrieb nach Anspruch 13, 14 oder 15, **dadurch gekennzeichnet, dass** der Hohlraum (39) mit dem zweiten Druckraum (23) dauernd fluidisch verbunden ist, unabhängig von dem Eingriffsbereich von Spindel und Spindelmutter.

17. Linearantrieb nach Anspruch 16, **dadurch gekennzeichnet, dass** die dauernde fluidische Verbindung durch wenigstens eine Bohrung (40) im Kolben (31) realisiert ist, die einen schrägen Verlauf aufweist.

## Claims

1. Linear drive for generating an actuating movement and for applying a high holding force, in particular for the movement of moulding dies and for applying a closing force thereto, with a spindle drive (16) for the actuating movement, with a differential cylinder unit (10) which is required for applying the holding force and has a piston rod (20), connected to an axially movable component (29) of the spindle drive (16), a piston rod-side annular first pressure space (22) and a piston rod-remote second pressure space (23), and with a hydraulic accumulator (15), **characterized in that**, during the extension of the piston rod (20), pressure medium can be displaced out of the first pressure space (22) into the hydraulic accumulator (15), **in that** pressure medium flows out of a tank (14) into the second pressure space (23), and **in that**, to apply the required holding force, the second pressure space (23) is shut off from the tank (14) and is connected to the hydraulic accumulator (15).

2. Linear drive according to Claim 1, **characterized in that** the first pressure space (22) and the hydraulic accumulator (15) are permanently connected fluidically.

3. Linear drive according to Claim 1 or 2, **characterized in that** the second pressure space (23) is connected to the tank (14) and to the hydraulic accumulator (15) by means of a switchable valve arrangement.

4. Linear drive according to Claim 3, **characterized in that** a first 2/2-way valve (24) closes a fluidic connection (12) between the second pressure space (23) and the hydraulic accumulator (15) when a second 2/2-way valve (25) opens a fluidic connection (13) from the second pressure space (23) to the tank (14).

5. Linear drive according to one of Claims 2 to 4, **characterized in that** a non-return valve (44) opening towards the first pressure space (22) is arranged between the first pressure space (22) and the tank (14).

6. Linear drive according to a preceding claim, **characterized in that** an electric motor (18) actuating the spindle drive (16) is arranged parallel to the differential cylinder unit (10).

7. Linear drive according to a preceding claim, **characterized in that** the differential cylinder unit (10) having a piston (19) and a cylinder housing (21) is connected mechanically to a fixed stand (26) via the cylinder housing (21).

8. Linear drive according to a preceding claim, **characterized in that** the electrically actuated spindle drive (16) is designed as a rolling threaded drive with a spindle nut (30) equipped as a rolling threaded nut.

9. Linear drive according to a preceding claim, **characterized in that** the spindle nut (30) mounted rotatably on its outer circumferential surface can be driven rotating by the motor (18) and displaces the spindle (29) in the axial direction.

10. Linear drive according to a preceding claim, **characterized in that** the axis of the differential cylinder unit (10) and the axis of the spindle drive (16) are arranged parallel to and at a distance from one another.

11. Linear drive according to Claim 10, **characterized in that** the spindle (29) and the piston rod (20) are connected to one another fixedly via a crossmember (28).

12. Linear drive according to one of Claims 1 to 9, **characterized in that** the spindle drive (16) and the differential cylinder unit (10) are arranged coaxially to one another.

13. Linear drive according to Claim 12, **characterized in that** the differential cylinder (10) is designed with a cylinder tube (33), with a cylinder head (34), with a cylinder bottom (35) and with a hollow piston (31) having a hollow piston rod (32), and **in that** the spindle (29) passes through the cylinder bottom (35) and projects into the cavity (39) of piston (31) and piston rod (32).

14. Linear drive according to Claim 12 or 13, **characterized in that** the spindle (29) has a threadless extension (36), with which it passes, sealed off, through the cylinder bottom (35).

15. Linear drive according to Claim 12, 13 or 14, **characterized in that** the piston (31) forms directly the spindle nut.

16. Linear drive according to Claim 13, 14 or 15, **characterized in that** the cavity (39) is permanently connected fluidically to the second pressure space (23) independently of the range of engagement of the spindle and spindle nut.

17. Linear drive according to Claim 16, **characterized in that** the permanent fluidic connection is implemented by means of at least one bore (40) located in the piston (31) and having an oblique course.

## Revendications

1. Entraînement linéaire pour produire un mouvement de réglage et pour appliquer une grande force de retenue, en particulier pour déplacer des outils de moulage et pour appliquer une force de fermeture sur ceux-ci, comprenant un entraînement à broche (16) pour le mouvement de réglage, une unité à cylindre différentiel (10) requise pour appliquer la force de retenue, qui présente une tige de piston (20) qui est connectée à un composant déplaçable axialement (29) de l'entraînement à broche (16), un premier espace de pression (22) de forme annulaire du côté de la tige de piston, et un deuxième espace de pression (23) du côté opposé à la tige de piston, et comprenant un accumulateur hydraulique (15), **caractérisé en ce que** lors de la sortie de la tige de piston (20), un fluide sous pression peut être refoulé hors du premier espace de pression (22) dans l'accumulateur hydraulique (15), **en ce que** le fluide sous pression s'écoule hors d'un réservoir (14) dans le deuxième espace de pression (23) et **en ce que** pour appliquer la force de retenue requise, le deuxième espace de pression (23) est isolé du réservoir (14) et est connecté à l'accumulateur hydraulique (15).

2. Entraînement linéaire selon la revendication 1, **caractérisé en ce que** le premier espace de pression (22) et l'accumulateur hydraulique (15) sont connectés fluidiquement de manière durable.

3. Entraînement linéaire selon la revendication 1 ou 2, **caractérisé en ce que** le deuxième espace de pression (23) est connecté au réservoir (14) et à l'accumulateur hydraulique (15) au moyen d'un agencement de soupape commutable.

4. Entraînement linéaire selon la revendication 3, **caractérisé en ce qu'**une première soupape à 2/2 voies (24) ferme une connexion fluidique (12) entre le deuxième espace de pression (23) et l'accumulateur hydraulique (15), lorsqu'une deuxième soupape à 2/2 voies (25) ouvre une connexion fluidique (13) du deuxième espace de pression (23) au réservoir (14).

5. Entraînement linéaire selon l'une quelconque des revendications 2 à 4, **caractérisé en ce qu'**entre le premier espace de pression (22) et le réservoir (14) est disposé un clapet anti-retour (44) s'ouvrant vers le premier espace de pression (22).

6. Entraînement linéaire selon l'une quelconque des revendications précédentes, **caractérisé en ce qu'**un moteur électrique (18) actionnant l'entraînement à broche (16) est disposé parallèlement à l'unité à cylindre différentiel (10).

7. Entraînement linéaire selon l'une quelconque des revendications précédentes, **caractérisé en ce que** l'unité à cylindre différentiel (10) présentant un piston (19) et un boîtier de cylindre (21) est connectée mécaniquement par le biais du boîtier de cylindre (21) à un bâti fixe (26).

8. Entraînement linéaire selon l'une quelconque des revendications précédentes, **caractérisé en ce que** l'entraînement à broche (16) à commande électrique est réalisé sous forme d'entraînement à filetage roulant avec un écrou de broche (30) configuré sous forme d'écrou à filetage roulant.

9. Entraînement linéaire selon l'une quelconque des revendications précédentes, **caractérisé en ce que** l'écrou de broche (30) monté à rotation sur sa surface périphérique extérieure peut être entraîné en rotation par le moteur (18) et déplace la broche (29) dans la direction axiale.

10. Entraînement linéaire selon l'une quelconque des revendications précédentes, **caractérisé en ce que** l'axe de l'unité à cylindre différentiel (10) et l'axe de l'entraînement à broche (16) sont disposés parallèlement à distance l'un de l'autre.

11. Entraînement linéaire selon la revendication 10, **caractérisé en ce que** la broche (29) et la tige de piston (20) sont connectées l'une à l'autre fixement par le biais d'une traverse (28).

12. Entraînement linéaire selon l'une quelconque des revendications 1 à 9, **caractérisé en ce que** l'entraînement à broche (16) et l'unité à cylindre différentiel (10) sont disposées coaxialement l'une par rapport à l'autre.

13. Entraînement linéaire selon la revendication 12, **caractérisé en ce que** le cylindre différentiel (10) est réalisé avec un tube de cylindre (33), une culasse (34), un fond de cylindre (35) et un piston creux (31) avec une tige de piston creuse (32) et **en ce que** la broche (29) traverse le fond de cylindre (35) et pénètre dans la cavité (39) du piston (31) et de la tige de piston (32).

14. Entraînement linéaire selon la revendication 12 ou 13, **caractérisé en ce que** la broche (29) a un prolongement sans filetage (36), avec lequel elle traverse hermétiquement le fond de cylindre (35).

15. Entraînement linéaire selon la revendication 12, 13 ou 14, **caractérisé en ce que** le piston (31) forme directement l'écrou de broche.

16. Entraînement linéaire selon la revendication 13, 14 ou 15, **caractérisé en ce que** la cavité (39) est connectée fluidiquement de manière durable au deuxième espace de pression (23), indépendamment de la région d'engagement de la broche et de l'écrou de broche.

17. Entraînement linéaire selon la revendication 16, **caractérisé en ce que** la connexion fluidique durable est réalisée par au moins un alésage (40) dans le piston (31), lequel présente une allure oblique.
